Europäisches Patentamt

European Patent Office

Office européen des brevets

(11) Veröffentlichungsnummer: **0 275 958**
**A2**

## (12) EUROPÄISCHE PATENTANMELDUNG

(21) Anmeldenummer: 88100632.4

(51) Int. Cl.⁴: **A23K 3/00**

(22) Anmeldetag: 19.01.88

(30) Priorität: 21.01.87 DE 3701567

(43) Veröffentlichungstag der Anmeldung:
27.07.88 Patentblatt 88/30

(84) Benannte Vertragsstaaten:
AT DE FR NL

(71) Anmelder: HOECHST AKTIENGESELLSCHAFT
Postfach 80 03 20
D-6230 Frankfurt am Main 80(DE)

(72) Erfinder: Remmert, Karl-Heinz
Krifteler Strasse 3
D-6238 Hofheim am Taunus(DE)
Erfinder: Lück, Erich, Dr.
Robert-Stolz-Strasse 102
D-6232 Bad Soden am Taunus(DE)

(54) Verfahren zur Konservierung von festen Futtermitteln.

(57) Die Erfindung betrifft ein Verfahren zur Konservierung von festen Futtermitteln mit einem Wassergehalt bis zu 20 Gew.-%. Die Konservierung wird dadurch erreicht, daß man die Futtermittel mit zwei Komponenten vermischt, wobei die erste Komponente Sorbinsäure oder ein Sorbat ist, und die zweite eine pysiologisch unbedenkliche Säure oder deren saures Salz.

EP 0 275 958 A2

0 275 958

## Verfahren zur Konservierung von festen Futtermitteln

Die Erfindung betrifft ein Verfahren zur Konservierung von festen Futtermitteln mit einem Wassergehalt bis zu 20 Gew.-%, die als Viehfutter für Nutztiere Verwendung finden. Darunter fallen z.B. Futtermittel für Hühner, Rinder und Schweine.

Nahezu alle organischen Futtermittel sind gute Nährböden für eine mehr oder minder große Zahl lebender Keime oder zumindest von Sporen unterschiedlicher Art. Obwohl Futtermittel gute Nährböden darstellen, ist die Anwesenheit dieser Mikroorganismen allein nicht hinreichend für einen Verderb. Den Mikroorganismen muß außerdem für ihre Stoffwechseltätigkeit genügend Feuchtigkeit zur Verfügung stehen. Diese Feuchtigkeit ist im allgemeinen von Natur aus in Futtermitteln vorhanden, so daß dadurch und durch Temperatur begünstigt die Mikroorganismen bereits nach relativ kurzer Zeit das Futter verderben. Darüber hinaus besteht bei der Lagerung von Futtermitteln in Silos die Gefahr von Kondenswasserbildung durch Temperaturschwankungen, so daß sich über der Futtermittelschicht eine relativ hohe Luftfeuchtigkeit bildet, die das Wachstum der Mikroorganismen in erheblichem Maße begünstigt.

Es ist bekannt, zur Haltbarmachung von Futtermitteln diese entweder zu trocken oder mit chemischen Konservierungsstoffen zu versetzen. Diese Verfahren verursachen jedoch erhebliche Kosten, die bezogen auf die relativ billigen Futtermittel nicht immer zu vertreten sind.

Ideal wäre eine chemische Konservierung von Futtermitteln, die eine offene Lagerung oder eine Lagerung in Silos für mindestens einige Wochen möglich macht.

Diesem Ideal kommt am nächsten die Sorbinsäure, die wegen ihrer starken Wirkung gegen Schimmelpilze zur Konservierung von vielen Futtermitteln gut geeignet ist. Sorbinsäure ist dennoch bei den billigen Futtermitteln nur beschränkt brauchbar. Dies liegt an dem teilweise hohen pH-Wert der Futtermittel und den starken Nachinfektionen während ihrer Herstellung und Lagerung. Sorbinsäure müßte in hohen Konzentrtionen benutzt werden, was wegen des relativ hohen Preises der Sorbinsäure unwirtschaftlich wäre.

Überraschenderweise wurde nun gefunden, daß man durch Zusatz von Sorbinsäure oder Sorbaten in Kombination mit physiologisch unbedenklichen Säuren oder deren sauren Salzen eine besonders gute Konservierung von festen Futtermitteln erreicht. Dies war nicht naheliegend, da bei der niedrigen Restfeuchte dieser Futtermittel eine ausreichende Dissoziation der Säurungsmittel und folglich eine wirksame Säuerung nicht zu erwarten war.

Gegenstand der Erfindung ist ein Verfahren zur Konservierung von festen Futtermitteln mit einem Wassergehalt bis zu 20 Gew.-%, dadurch gekennzeichnet, daß man die Futtermittel mit zwei Komponenten vermischt, wobei als erste Komponente mindestens eine Verbindung der aus Sorbinsäure und den Sorbaten bestehenden Verbindungsklasse eingesetzt wird, und zwar in einer Menge von $1 \bullet 10^4$ bis $4 \bullet 10^3$ Mol pro 100 g unkonservierter Futtermittel, und wobei als zweite Komponente mindestens eine Verbindung der aus physiologisch unbedenklichen Säuren und ihren sauren Salzen bestehenden Verbindungsklasse eingesetzt wird, und zwar in einer Menge von 0,5 bis 5 Gew.-%, bezogen auf unkonservierte Futtermittel.

Als erste Komponente wird Sorbinsäure oder ein oder mehrere Sorbate oder ein Gemisch aus Sorbinsäure mit einem oder mehreren Sorbaten benutzt, vorzugsweise Sorbinsäure oder Kaliumsorbat. Vorzugsweise haben mindestens 80 Gew.-% der Sorbinsäure, insbesondere mindestens 90 Gew.-%, eine Korngröße unter 300 μm.

Die Menge der ersten Komponente beträgt $1 \bullet 10^4$ bis $4 \bullet 10^3$ Mol, vorzugsweise $2 \bullet 10^4$ bis $2 \bullet 10^3$ Mol, insbesondere $2 \bullet 10^4$ bis $1 \bullet 10^3$ Mol pro 100 g unkonservierter Futtermittel. Falls man Sorbinsäure als erste Komponente einsetzt, wäre also die Menge in Gew.-% etwa 0,011 bis 0,44 %, vorzugsweise etwa 0,022 bis 0,22 Gew.-%, insbesondere etwa 0,022 bis 0,11 Gew.-%, bezogen auf unkonservierte Futtermittel.

Als zweite Komponente wird eine physiologisch unbedenkliche Säure oder ein oder mehrere saure Salze derartiger Säuren bzw. ein Gemisch aus derartigen Säuren mit einem oder mehreren sauren Salzen derartiger Säuren benutzt. Geeignet sind z.B. Amidosulfonsäure, Orthophosphorsäure, Salzsäure, Schwefelsäure, saure Salze der Orthophosphorsäure, Hydrogensulfate, Hydrogensulfite, Adipinsäure, Ameisensäure, Citronensäure, Essigsäure, Natriumdiacetat, Fumarsäure, Milchsäure, Propionsäure und Weinsäure. Vorzugsweise verwendet man Amidosulfonsäure, Orthophosphorsäure, Hydrogensulfate, Hydrogensulfite, Adipinsäure, Ameisensäure, Citronensäure, Essigsäure oder Fumarsäure. Die Menge der zweiten Komponente beträgt 0,5 bis 5 Gew.-%, vorzugsweise 1 bis 3 Gew.-%, bezogen auf unkonservierte Futtermittel.

Es ist grundsätzlich bekannt, daß die Wirkung von Sorbinsäure und Sorbaten in flüssigen oder breiigen Medien durch Zusatz von Säuren oder sauren Salzen verbessert wird. Überraschenderweise gilt dies auch für feste Futtermittel.

2

Dies war nicht naheliegend, da bei der relativ niedrigen Restfeuchte der festen Futtermittel eine ausreichende Dissoziation der Säuerungsmittel nicht zu erwarten war. Der bei der Verwendung der Sorbinsäure oder der Sorbate in Kombination mit sauren Verbindungen zu erreichende konservierende Effekt ist wesentlich größer als aufgrund der bekannten Wirkungen der Einzelkomponenten zu erwarten war.

Die beiden erfindungsgemäß zu verwendenden Komponenten werden gemeinsam oder der Reihe nach mit den Futtermitteln vermischt.

Das erfindungsgemäße Konservierungsverfahren ist wirtschaftlicher als bisherige chemische bzw. physikalische Verfahren.

Die erfindungsgemäß konservierten Futtermittel werden von Schweinen, Rindern und anderen Nutztieren geschmacklich akzeptiert.

Die in den folgenden Beispielen angegebenen Prozente sind stets Gew.-%. Falls flüssige Substanzen als zweite Komponenten der Konservierungsmischung eingesetzt wurden, wie Orthophosphorsäure oder Essigsäure, so wurden diese zuvor in einem Becherglas mit einer Teilmenge des Futtermittels gut vermischt und dann mit der Restmenge des Futtermittels.

**Vergleichsbeispiel 1**

Handelsübliches Ferkelaufzuchtfutter in Mehlform wurde auf einen Feuchtigkeitsgehalt von 14,6 % eingestellt. Zu dem Futter wurden die in der Tabelle aufgeführten Mengen an Sorbinsäure oder Kaliumsorbat gegeben und mit Hilfe eines Handrührgerätes gut vermischt.

Das so behandelte Futtermittel wurde jeweils in halb gefüllten Glasfaschen bei Zimmertemperatur gelagert. Hierbei ergaben sich folgende Haltbarkeiten:

| Sorbinsäure oder Sorbat | Zeit bis zum Auftreten von sichtbarem Schimmelbefall |
|---|---|
| --      Kontrollversuch | 8 Tage |
| 0,025 % Sorbinsäure normaler Korngröße* | 11 Tage |
| 0,025 % Sorbinsäure feinkörnig** | 13 Tage |
| 0,035 % Kaliumsorbat | 13 Tage |
| 0,05  % Sorbinsäure normaler Korngröße** | 14 Tage |
| 0,05  % Sorbinsäure feinkörnig** | 17 Tage |
| 0,07  % Kaliumsorbat | 17 Tage |

*  (500-800 µm : 10 %; 300-500 µm : 40 %; unter 300 µm : 50 %)
** (400-500 µm :  2 %; 300-400 µm :  8 %; unter 300 µm : 90 %)

**Vergleichsbeispiel 2**

Handelsübliches Ferkelaufzuchtfutter in Mehlform mit einem Feuchtigkeitsgehalt von 14,6 % wurde mit folgenden Mengen an Säuren oder sauren Salzen analog zu Vergleichsbeispiel 1 behandelt. Es ergaben sich folgende Haltbarkeiten:

0 275 958

| Säure oder saures Salz | | Zeit bis zum Auftreten von sichtbarem Schimmelbefall |
|---|---|---|
| -- | Kontrollversuch | 8 Tage |
| 2,0 % | Amidosulfonsäure | 9 Tage |
| 2,0 % | Orthophosphorsäure | 9 Tage |
| 2,0 % | Adipinsäure | 8 Tage |
| 2,0 % | Ameisensäure | 10 Tage |
| 2,0 % | Citronensäure | 8 Tage |
| 2,0 % | Essigsäure | 9 Tage |
| 2,0 % | Fumarsäure | 8 Tage |
| 2,0 % | Milchsäure | 8 Tage |
| 2,0 % | Propionsäure | 30 Tage |
| 2,0 % | Weinsäure | 8 Tage |
| 3,0 % | Natriumdiacetat ($CH_3COOH \cdot CH_3COONa$) | 9 Tage |
| 3,0 % | Natriumhydrogensulfat | 9 Tage |
| 3,0 % | Natriumhydrogensulfit | 9 Tage |
| 3,0 % | saures Natriumpyrophosphat | 8 Tage |
| 3,0 % | Superphosphat ($2[CaSO_4 \cdot 2H_2O]+Ca(H_2PO_4)_2$) | 8 Tage |

**Beispiel 1**

Handelsübliches Ferkelaufzuchtfutter in Mehlform mit einem Feuchtigkeitsgehalt von 14,6 % wurde mit folgenden Mengen an Konservierungsmischungen analog zu Vergleichsbeispiel 1 behandelt, wobei stets feinkörnige Sorbinsäure (siehe Definition im Vergleichsbeispiel 1) verwendet wurde. Es ergaben sich folgende Haltbarkeiten:

5

| Konservierungsmischung | Zeit bis zum Auftreten von sichtbarem Schimmelbefall |
|---|---|
| 0,025 % Sorbinsäure + 2,0 % Amidosulfonsäure | 18 Tage |
| 0,025 % Sorbinsäure + 2,0 % Orthophosphorsäure | 20 Tage |
| 0,025 % Sorbinsäure + 2,0 % Adipinsäure | 16 Tage |
| 0,025 % Sorbinsäure + 2,0 % Ameisensäure | 22 Tage |
| 0,025 % Sorbinsäure + 2,0 % Citronensäure | 17 Tage |
| 0,025 % Sorbinsäure + 2,0 % Essigsäure | 20 Tage |
| 0,025 % Sorbinsäure + 2,0 % Fumarsäure | 21 Tage |
| 0,025 % Sorbinsäure + 2,0 % Milchsäure | 14 Tage |
| 0,025 % Sorbinsäure + 2,0 % Propionsäure | mehr als 1 Monat |
| 0,025 % Sorbinsäure + 2,0 % Weinsäure | 14 Tage |
| 0,025 % Sorbinsäure + 3,0 % Natriumdiacetat | 15 Tage |
| 0,025 % Sorbinsäure + 3,0 % Natriumhydrogensulfat | 17 Tage |
| 0,025 % Sorbinsäure + 3,0 % Natriumhydrogensulfit | 18 Tage |
| 0,025 % Sorbinsäure + 3,0 % saures Natriumpyrophosphat | 14 Tage |
| 0,025 % Sorbinsäure + 3,0 % Superphosphat | 14 Tage |

**Beispiel 2**

Handelsübliches Ferkelaufzuchtfutter in Mehlform mit einem Feuchtigkeitsgehalt von 14,6 % wurde mit folgenden Mengen an Konservierungsmischungen analog zu Vergleichsbeispiel 1 behandelt, wobei stets feinkörnige Sorbinsäure (siehe Definition im Vergleichsbeispiel 1) verwendet wurde. Es ergaben sich folgende Haltbarkeiten:

| Konservierungsmischung | Zeit bis zum Auftreten von sichtbarem Schimmelbefall |
|---|---|
| 0,05 % Sorbinsäure + 2,0 % Amidosulfonsäure | mehr als 1 Monat |
| 0,05 % Sorbinsäure + 2,0 % Orthophosphorsäure | mehr als 1 Monat |
| 0,05 % Sorbinsäure + 2,0 % Adipinsäure | 30 Tage |
| 0,05 % Sorbinsäure + 2,0 % Ameisensäure | mehr als 1 Monat |
| 0,05 % Sorbinsäure + 2,0 % Citronensäure | 30 Tage |
| 0,05 % Sorbinsäure + 2,0 % Essigsäure | mehr als 1 Monat |
| 0,05 % Sorbinsäure + 2,0 % Fumarsäure | mehr als 1 Monat |
| 0,05 % Sorbinsäure + 2,0 % Milchsäure | 24 Tage |
| 0,05 % Sorbinsäure + 2,0 % Propionsäure | mehr als 1 Monat |
| 0,05 % Sorbinsäure + 2,0 % Weinsäure | 20 Tage |
| 0,05 % Sorbinsäure + 3,0 % Natriumdiacetat | 24 Tage |
| 0,05 % Sorbinsäure + 3,0 % Natriumhydrogensulfat | mehr als 1 Monat |
| 0,05 % Sorbinsäure + 3,0 % Natriumhydrogensulfit | mehr als 1 Monat |
| 0,05 % Sorbinsäure + 3,0 % saures Natriumpyrophosphat | 21 Tage |
| 0,05 % Sorbinsäure + 3,0 % Superphosphat | 23 Tage |

**Ansprüche**

1. Verfahren zur Konservierung von festen Futtermitteln mit einem Wassergehalt bis zu 20 Gew.-%, dadurch gekennzeichnet, daß man die Futtermittel mit zwei Komponenten vermischt, wobei als erste Komponente mindestens eine Verbindung der aus Sorbinsäure und den Sorbaten bestehenden Verbindungsklasse eingesetzt wird, und zwar in einer Menge von $1 \cdot 10^4$ bis $4 \cdot 10^3$ Mol pro 100 g unkonservierter Futtermittel, und wobei als zweite Komponente mindestens eine Verbindung der aus physiologisch unbedenklichen Säuren und ihren sauren Salzen bestehenden Verbindungsklasse eingesetzt wird, und zwar in einer Menge von 0,5 bis 5,0 Gew.-%, bezogen auf unkonservierte Futtermittel.

2. Verfahren nach Anspruch 1, dadurch gekennzeichnet, daß man als erste Komponente Sorbinsäure oder Kaliumsorbat einsetzt.

7

3. Verfahren nach Anspruch 1, dadurch gekennzeichnet, daß man als erste Komponente Sorbinsäure zusetzt, die zu mindestens 80 Gew.-% eine Korngröße unter 300 μm hat.

4. Verfahren nach Anspruch .1, dadurch gekennzeichnet, daß man als erste Komponente Sorbinsäure zusetzt, die zu mindestens 90 Gew.-% eine Korngröße unter 300 μm hat.

5. Verfahren nach mindestens einem der Ansprüche 1 bis 4, dadurch gekennzeichnet, daß man als zweite Komponente ·Amidosulfonsäure, Orthophosphorsäure, Hydrogensulfate, Hydrogensulfite, Adipinsäure, Ameisensäure, Citronensäure, Essigsäure oder Fumarsäure einsetzt.

6. Verfahren nach mindestens einem der Ansprüche 1 bis 5, dadurch gekennzeichnet, daß die Menge der ersten Komponente $2 \cdot 10^4$ bis $2 \cdot 10^3$ Mol pro 100 g unkonservierter Futtermittel beträgt.

7. Verfahren nach mindestens einem der Ansprüche 1 bis 5, dadurch gekennzeichnet, daß die Menge der ersten Komponente $2 \cdot 10^4$ bis $1 \cdot 10^3$ Mol pro 100 g unkonservierter Futtermittel beträgt.

8. Verfahren nach mindestens einem der Ansprüche 1 bis 7, dadurch gekennzeichnet, daß die Menge der zweiten Komponente 1 bis 3 Gew.-%, bezogen auf unkonservierte Futtermittel beträgt.